# EUROPEAN PATENT APPLICATION

(11) **EP 0 896 499 A2**
(43) Date of publication of application: **10.02.1999**
(21) Application number: 98114042.9
(22) Date of filing: 28.07.1998
(51) Int. Cl.: H05B 3/00

(54) **Improved arrangement for clamping heating elements or annular casings**

(30) Priority: 07.08.1997 IT PN970036 U
(71) Applicant: I.R.C.A. S.P.A. INDUSTRIA RESISTENZE CORAZZATE ED AFFINI, I-31020 San Vendemiano (TV) (IT)
(72) Inventor: Piccin, Stefano, 31029 Vittorio Veneto, Treviso (IT)
(74) Representative: Giugni, Valter

(57) **Abstract**

Clamping arrangement for fastening preferably annular casings having an approximately cylindrical external sleeve with two distinct portions having mutually opposing edges clamped together by means of a collar formed by a first section applied to one edge and a second section applied to the other edge, said sections comprising a respective connection element, each one of which is provided with a respective hole, and capable of being connected to each other through appropriate threaded bolt passing through said holes, wherein one of said connection elements is inserted in its respective housing in a stable manner, the other connection element is freely removable from its respective housing, and the threaded bolt is capable of being engaged by means of screwing in an adjustable position with respect to said connection element firmly retained in its respective housing, while being on the other hand capable of sliding freely with respect to said freely removable connection element; said bolt is provided with a fixed portion adapted to abut against said freely removable connection element .

## Description

The present invention refers to improved fastening and clamping means for connecting the two opposite edges of a heating element or an external annular casing that typically encloses circular heating elements arranged around such mechanical parts as cylinders to be heated, eg. injection-moulding or extrusion runners or gates in plastic processing machines.

Circular heating elements that are wound on cylindrical parts to be heated are generally known to be in most cases guarded outwards by appropriate external insulating casings owing to both safety reasons and the need for heat losses towards the outside to be minimized, in view also of maximizing the amount of heat that is desirably directed inwards, ie. towards the part to be heated.

These casings have obviously a cylindrical shape, since they are required to conform on to the outside contour of said circular heating elements. However, for them to be able to be applied and clamped, they are made in form of a cylinder that can be opened along two generatrixes that are substantially opposite with respect to the axis of the cylinder. In this way, two edges corresponding to the sectioning of a generatrix are therefore joined to each other by a (or more) hinge means applied between such corresponding, opposite edges, said hinge means enabling the casing to be opened and closed with a rotary motion on the heating element.

The two edges corresponding to the sectioning along the opposite generatrix are therefore brought close to each other and must be securely fastened to each other, so as to ensure the best possble adherence of the heating element against the cylindrical part, and are then clamped in their position of tightest fastening.

To this purpose, the edges that must be fastened to each other are provided with one or more means that will be called "collars" in this context according to a term that is generally used in the art. Each one of these collars is formed by two sections, each one of which is applied in an opposite position on a respective edge.

Each such section comprises a metal plate that is fixed, generally by welding, on to the respective edge of the casing, wherein said plate, in its portion facing the opposite edge of the casing, is curved backwards to form a bend that has usually a circular shape so as to create a cylindrically shaped housing.

A round element is usually inserted in said cylindrical housing, wherein said round element is then held firmly in said housing by the respective section of the collar.

A construction is in this way obtained in which there are arranged two round elements firmly joined with the respective section of the same collar, wherein said round elements are positioned in a mutually parallel arrangement.

Said round elements are also provided with a through-hole and this through-hole is threaded internally so as to be capable of engaging a single externally threaded bolt that is screwed into said holes and, when appropriately tightened, causes the respective round elements, and therefore the respective sections of the collar, to come closer to each other and, as a result, causes the opposite edges of the collar to close in against each other.

The above described solution is generally known to all those skilled in the art and has been illustrated here to the mere purpose of better outlining the scope of the present invention.

The described solution appears to be a quite simple one from a construction point of view, but has a rather serious drawback in connection with the assembly of the casing. As a matter of fact, for such a casing to be able to be assembled in a smooth, regular and correct manner, the two holes in which the bolt is due to get engaged, shall be perfectly aligned in view of enabling the bolt to be screwed in.

However, it is quite frequently impossible for the casing to be positioned with the desired extent of accuracy owing to both the actual bulkiness of the casing and the fact that the operator is scarcely able to adequately control such a positioning operation, as well as owing to the fact that the space around the casing is usually very limited and does not allow for a convenient insertion and tightening of the bolt, which therefore must generally be completed in an awkward, unacceptably slow manner.

A commonly known practice adopted in order to overcome this serious assembly drawback consists in making one of said round elements movable and separable from its housing, as well as increasing the inside diameter of the hole provided in said round element so as to enable the bolt to freely slide therethrough and loosely move therein.

Furthermore, the assembly is carried out by first inserting the bolt in said freely movable round element being so provided with a larger hole, and then partially screwing the same bolt into the round element that is firmly retained inside its cylindrical housing.

The freely removable round element, which is so able to be positioned rather loosely with respect to the bolt, becomes at this point a kind of "hook" that can be conveniently rotated and displaced, by making use of such a slack, so that, when the casing must be closed together, all it takes to clamp the two sections of the collar together, and therefore to close the casing, is to appropriately, and now easily, position said round element provided with a larger hole, and containing the bolt, in the respective cylindrical housing and then tighten the bolt, whose head is of course situated on the side of the round element with the larger hole.

Such a solution is quite effective in appropriately solving the problem connected with the alignment of the elements of the collar. However, it has been definitely found that the fact that said round element with the larger hole is so made removable from the respective housing, actually causes such a cylindrical housing to become very weak with respect to the tightening and clamping forces involved. As a matter of fact, if a force is applied to tighten said bolt, it usually occurs that the collar section associated to said freely removable round element absorbs a considerable part of the tightening stress, thereby undergoing a significant deformation, but above all impairing a correct clamping of the casing or even preventing it from being clamped in a complete, adequate manner.

Based on the above considerations, it therefore is a purpose of the present invention to provide a fastening and clamping arrangement that is capable of eliminating the above mentioned drawbacks, is simple and low-cost in its construction, is reliable, effective and convenient in practical use.

The present invention discloses a type of arrangement having the features and characteristics as substantially recited in the appended claims.

Characteristics and advantages of the present invention will anyway be more readily and clearly understood from the description that is given below by way of non-limiting example with reference to the accompanying drawings, in which
- Figure 1 is a breakdown view of the various component parts forming the arrangement according to the present invention;
- Figure 2 is a view of a first phase in the assembly of the same component parts;
- Figure 3 is a view of the two sections of the collar according to the present invention, in the phase that immediately precedes their being joined together;
- Figure 4 is a view of the same collar sections shown in Figure 3, in the state in which they have just been joined, but not yet clamped together;
- Figure 5 is a view of the same collar sections illustrated in Figures 3 and 4, in the state in which they are clamped together.

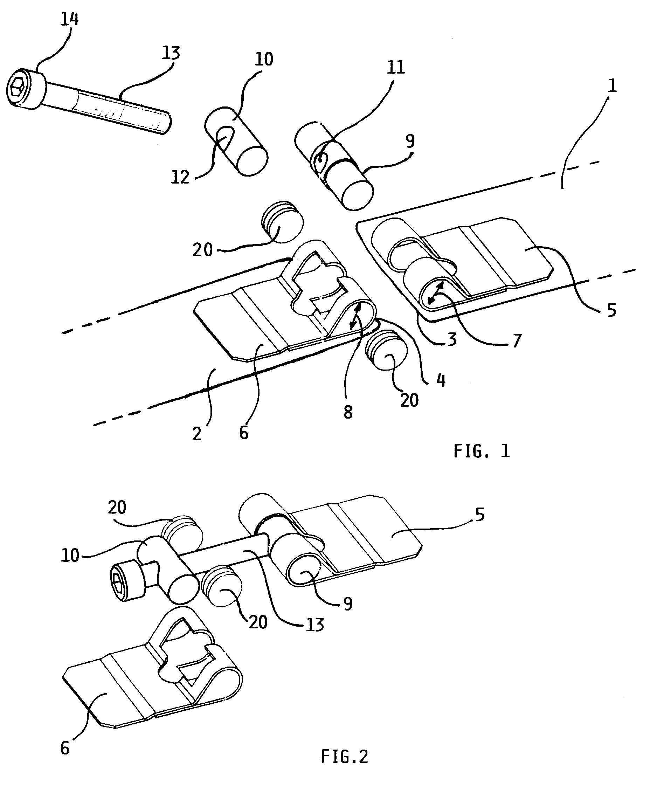

With reference to Figure 1, the arrangement can be noticed to substantially comprise an external annular sleeve capable of being opened along a generatrix thereof, separating said collar into two mutually opposed portions 1, 2 along the respective opposite edges 3 and 4.

On each one of said portions there are mounted respective sections 5 and 6 of a same collar, which are provided in the form of plates attached to the respective portions of said sleeve.

Each such section is so shaped, in its end portion facing the opposite section, as to form a respective housing 7, 8, which, as illustrated in the Figures, is preferably obtained through a cylindrical curvature of said respective end portions.

One of said housings 7 is adapted to firmly confine and hold a connection element 9, which however is capable of rotating inside said respective housing thereof, as this will be more clearly explained further on in this description.

The other housing 8 is adapted to hold a respective connection element 10 which, unlike the first one, is however given a shorter length so as to enable it to freely engage and disengage its respective housing by passing through an appropriate aperture having an approximately rectangular shape, and identified by the sides 20a, 20b, 20c and 20d in the Figure, which is provided on a side of said respective housing.

Each one of said two connection elements 9 and 10 are provided with respective attachment means, which are constituted by through-holes 11 and 12, respectively, in the example given here, whose axes (not shown) are anyway so aligned as to make it possible for a joining element, which is a bolt 13 in the example given here, to be inserted in said through-holes.

Such a bolt is a threaded one, and the through-hole 11 provided in the connection element 9 is threaded symmetrically in its interior in such a manner as to enable said bolt to be engaged in said hole by merely screwing it in.

On the other hand, the through-hole 12 provided in the connection element 10, which is freely removable with respect to its housing 8, has on the contrary an inside diameter which is larger than the outside diameter of the bolt 13; the interior of this hole is furthermore smooth, ie. unthreaded, so that said bolt can be slidably inserted in said hole 12 without it being able to actually getting engaged with it, except for the following circumstance: said bolt is provided with a projecting head 14 arranged on its end portion on the side of the freely removable connection element 10, wherein said head has an outside diameter which is larger than the inside diameter of said larger hole 12, so that when said bolt is fully and slidably inserted in said element 10, the latter, at the end of its stroke, comes to abut against said head 14 so that it is thereby stopped in its full-insertion position and prevented from slipping off.

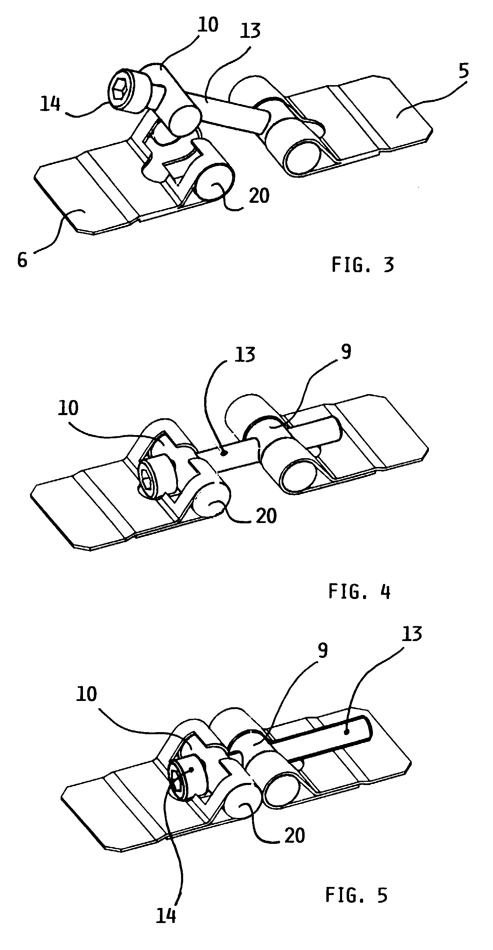

After having so described in detail the various component parts, as well as the geometric and mechanical configuration of an arrangement according to the present invention, a description is now given of the actual operation and practical use thereof. Such a practical utilization of the arrangement basically emerges from the sequence of the phases and operations as illustrated schematically in the Figures 2 through to 5.
- In the first one of such phases, the connection element 9 is inserted in a firm, ie. stable manner in its housing 7 with such an orientation as to enable the bolt 13 to be partially screwed into the hole 11 of said connection element 9 after having been previously slidably inserted in the larger hole 12 provided in the freely removable connection element 10.
- In the second phase (Figure 3), the two mutually opposed sections 1 and 2 of the external annular sleeve are drawn closer to each other so as to put the sleeve under the desired tension, while, in order to avoid possible detrimental interferences, the bolt 13 is rotated upwards as necessary, which thing is on the other hand allowed for by the fact that the connection element 9 can rotate coherently inside its housing 7, although remaining confined therein.
- In the third phase (Figure 4), the connection element 10 is inserted in its housing 8, wherein the bolt 13 and, if necessary, also the two sections 1 and 2 are rotated downwards and appropriately aligned.
- Finally, in the last phase the bolt 13 is screwed tight into the hole 11 of the connection element 9 and this of course causes the head 14 of the bolt to move closer to the opposite section 5 of the collar and, owing to the fact that said head comes to abut against the connection element 10, which is retained in its housing 8, the ultimate effect consists in the two sections 1 and 2 of said external sleeve being put under tension, ie. in traction, so as this is ultimately desired.

From the above description it clearly emerges that each such phase can be carried out very easily without any need arising for accurate alignments of component parts in a tension state to be ensured; in particular, the third phase, which is illustrated in Figure 3, can be carried out in an extremely simple, convenient and safe manner since the component parts involved are not under tension and the insertion of the connection element 10 in the respective housing 8 can therefore be readily carried out, by easily looking for the most appropriate position which can be found without any difficulty and without any need for tools to be used.

In the practical application and use of the arrangement according to the present invention a drawback came however to light, which threatens to jeopardize the practicableness of the same arrangement. As a matter of fact, during the final assembly phase (Figure 4), the tension which the cylindrical curved parts defining the housing 8 are exposed to causes them to undergo a significant deformation, to the extent that the parts forming the housings 7 and 8 may actually be prevented from clamping together since the tension brought about by the bolt 13 being screwed in tends to discharge into the deformation of the cylindrical curved parts delimiting the housing 8, rather than their moving closer to each other and becoming clamped together.

In order to eliminate such a drawback, a useful improvement consists in providing the end portions, or the inner portions, of said cylindrical curved parts defining the housing 8, which is intended to movably accomodate the connection element 10, with a respective filling element 20 of any appropriate type, eg. in the form of a plug or cap, made of any suitable non-deformable material, preferably a small metal cylinder obtained by properly machining a round bar or similar stock.

## Claims

1. Clamping arrangement for fastening preferably annular casings containing heating elements having a substantially circular development, comprising at least an external sleeve in the preferred shape of a cylinder and formed by two distinct portions (1, 2) having mutually opposing edges (3, 4) adapred to be connected and clamped to each other by means of a plurality of collars formed by a first section (5) applied to one edge and a second section (6) applied to the respectively opposed edge, said sections being formed by respective plate-like elements that are provided, at their respective end portions facing the opposite edge, a respective, preferably circular curvature adapted to create a respective housing (7, 8) adapted to accomodate and hold a respective connection element (9, 10), each one of which being provided with respective attachment means (11, 12), wherein said connection elements (9, 10) are capable of being connected to each other through appropriate joining means (13), preferably in the form of a threaded bolt, passing through said attachment means (11, 12), **characterized in that**:
- one of said connection elements (9) is inserted in its respective housing (7) in a stable and firm manner,
- the other connection element (10) is freely removable from its respective housing (8),
- said joining means (13) are capable of being engaged in an adjustable position, with respect to said connection element (9) firmly retained in its respective housing (7), and to freely assume any different position with respect to said freely removable connection element (10),
- said joining means (13) are provided with a fixed portion (14) adapted to come to abut against said freely removable connection element (10).

2. Clamping arrangement according to claim 1, **characterized in that** the attachment means (11) provided in said connection element (9) firmly retained in its respective housing (7) is an internally threaded hole, that the attachment means (12) provided in said other connection element (10) held in a freely removable manner in its respective housing (8) is a through-hole, and that said joining means (13) is a threaded bolt adapted to engage said threaded hole (11) and to slide freely in said through-hole (12).

3. Clamping arrangement according to claim 2, **characterized in that** said fixed portion (14) adapted to come into abutment with said freely removable connection element (10) is the head of said threaded bolt.

4. Clamping arrangement according to any of the preceding claims, **characterized in that** said connection element (9) inserted in a stable manner in its respective housing (7) is capable of being rotated with respect to said respective housing thereof.

5. Clamping arrangement according to any of the preceding claims, **characterized in that** the housing (8), adapted to accomodate said connection element (10) freely removable with respect thereto, has a cylindrical shape with an aperture (20a, 20b, 20c, 20d) on a side portion thereof, and that said respective connection element (10) is a cylindrical element capable of being housed in said housing (8) by passing through said aperture.

6. Clamping arrangement according to any of the preceding claims, **characterized in that** the inner portions of said housing (8) adapted to hold said freely removable connection element (10), which are not occupied by said connection element itself, are at least partially filled with a substantially non-deformable material (20).

7. Clamping arrangement according to claim 6 or 7, **characterized in that** said non-deformable material (20) is in the form of a plug or round bar.
